# EUROPEAN PATENT SPECIFICATION

(11) **EP 1 640 581 B1**
(45) Date of publication and mention of the grant of the patent: **12.10.2011**
(21) Application number: 04745634.8
(22) Date of filing: 07.06.2004
(51) Int. Cl.: F01N 3/30, F01N 3/22, F01N 3/24

(54) **FOUR-CYCLE ENGINE**
VIERTAKTMOTOR
MOTEUR QUATRE TEMPS

(30) Priority: 19.06.2003 JP 2003174735; 23.03.2004 JP 2004084603
(43) Date of publication of application: 29.03.2006
(60) Divisional application: 09010830.9
(73) Proprietor: Yamaha Hatsudoki Kabushiki Kaisha, Iwata-shi, Shizuoka 438-8501 (JP)
(72) Inventor: NISHIMURA, Hidehiro, c/o YAMAHA HATSUDOKI K.K., Shizuoka4388201 (JP); OOBA, Junichi, YAMAHA HATSUDOKI KABUSHIKI KAISHA, Shizuoka 4388501 (JP); TAKII, Osamu, YAMAHA HATSUDOKI KABUSHIKI KAISHA, Shizuoka 4388501 (JP)
(74) Representative: Grünecker, Kinkeldey, Stockmair & Schwanhäusser Anwaltssozietät
(86) International application number: PCT/JP2004/007924
(87) International publication number: WO 2004/113696

(56) References cited:
- EP-A- 1 277 930
- JP-A- 9 133 016
- JP-A- 2001 173 437
- JP-U- 53 059 014
- US-A- 5 814 283

## Description

The present invention relates to a four-cycle engine according to the preamble of independent claim 1 and to a method for purifying an exhaust gas of a four-cycle engine having first and second catalysts.

Such a four-cycle engine can be taken, for example, from the prior art document US 5,814,283. In particular, said prior art document teaches arrangement of a secondary air supply means connected to the space between a first and second catalytic converter. In order to improve cold start operation of the respective arrangement, said prior art document suggests to provide the upstream catalytic converter with electrical heating, so that the engine, especially the exhaust gas purifying means thereof, can be easily brought into sufficient operating condition by means of controlling the electrical heating.

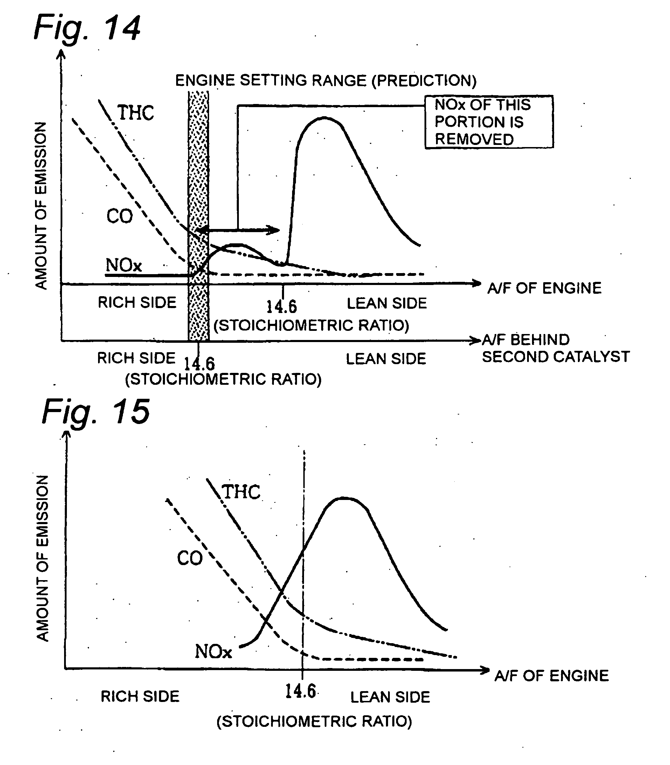

In general, in a relation between an air fuel ratio (A/F) and exhaust gas components of a four-cycle engine, as shown in Fig. 15, the exhaust gas components change significantly with the air fuel ratio of 14.6 (theoretical air fuel ratio = stoichiometric ratio) as a boundary. In other words, amounts of emission of CO and HC are large when the air fuel ratio is larger on a rich side than the stoichiometric ratio and are small on a lean side. On the other hand, conversely, near the stoichiometric ratio, an amount of emission of NOx is small on the rich side and large on the lean side.

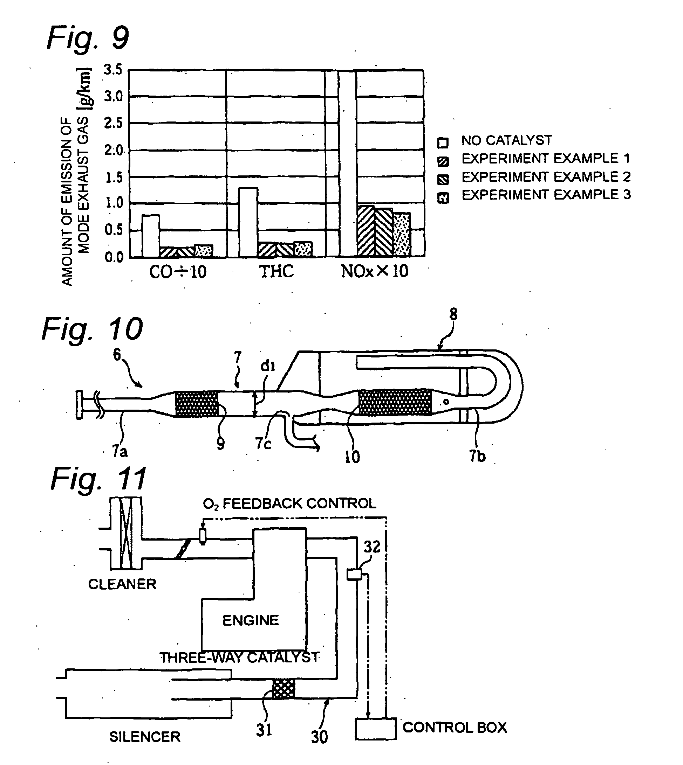

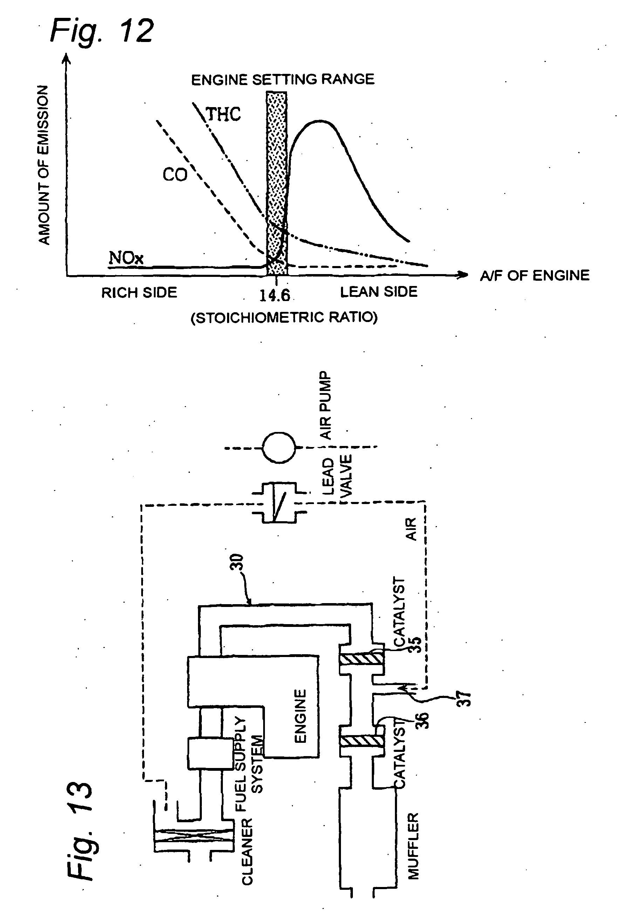

As such an engine equipped with an exhaust gas purifier for realizing removal of CO, HC, and NOx in exhaust gas, conventionally, there is one illustrated in Figs. 11 and 12. There is an engine in which a three-way catalyst 31 is arranged in the middle of an exhaust pipe 30, and an O₂ sensor 32 for detecting oxygen concentration in exhaust gas is arranged on an upstream side of the three-way catalyst 31 so as to feedback-control an amount of fuel injection to the engine such that a detected air fuel ratio, which is determined on the basis of the oxygen concentration, is the theoretical air fuel ratio (14.6), whereby CO, HC, and NOx are removed (e.g., see Patent Document 1).

Incidentally, in the exhaust gas purifier according to the O₂ feedback control, since it is necessary to control the amount of fuel injection such that the air fuel ratio is always the theoretical air fuel ratio, it can be said that the exhaust gas purifier is disadvantageous in increasing an engine power. Consequently, for example, there is a concern that satisfactory sense of riding cannot be obtained in a vehicle such as an autobicycle which has a small displacement compared with an automobile. In addition, in order to perform the O₂ feedback control, a fuel injection system using an injector is necessary. In order to realize the fuel injection system, a fuel pump, a fuel regulator, a controller, and the like have to be added, which causes an increase in cost.

On the other hand, as an engine equipped with another exhaust gas purifier, as illustrated in Figs. 13 and 14, there is an engine in which first and second catalysts 35 and 36 are arranged a space apart from each other in the exhaust pipe 30, secondary air induction pipe 37 for introducing secondary air into a part between the first and the second catalysts 35 and 36 of the exhaust pipe 30 to reduce NOx with the first catalyst 35 and subsequently oxidize CO and HC with the second catalyst 36 on a downstream side (e.g., see Patent Document 2).

In this exhaust gas purifier adapted to introduce secondary air into the part between the first and the second catalysts 35 and 36, since an air fuel ratio of an air fuel mixture to be supplied to the engine can be set to be richer than the theoretical air fuel ratio, it becomes possible to increase an engine power of the autobicycle with the small displacement, and there is an advantage that the sense of riding can be improved. In addition, a conventional carburetor can sufficiently cope with the exhaust gas purifier, which is advantageous in terms of cost compared with the case in which a fuel injection system is adopted.
Patent Document 1: JP-A-5-98955
Patent Document 2: JP-A-2002-161737

However, in the conventional engine equipped with the exhaust gas purifier for introducing secondary air into the part between the first and the second catalysts, there is a concern that a usable life of the catalysts is shortened depending upon an induction position of the secondary air. In other words, the catalysts are brought into a high temperature state by the introduction of the secondary air, and if the high temperature state lasts long, the catalysts easily deteriorate, and the usable life tends to be short.

In addition, in the conventional exhaust gas purifier, for example, since activation of the catalysts tends to delay at a cold start time of the engine, the removal of CO and HC cannot be performed sufficiently.

It is an object of the present invention to provide a four-cycle engine as indicated above as well as a method for purifying an exhaust gas of a four-cycle engine having a first and second catalyst, wherein activation of said catalyst in a cold start time is facilitated.

According to the present invention, said objective is solved by a four-cycle engine having the features of independent claim 1. Preferred embodiments are laid down in the dependent claims.

Furthermore, according to the method aspect of the present invention, said objective is also solved by a method for purifying an exhaust gas of a four-cycle engine having the features of independent claim 5.

Accordingly, it is provided a four-cycle engine which can control deterioration of the catalysts in the case in which secondary air is introduced into a part between two catalysts and facilitate activation of the catalysts at a cold start time.

The inventors devoted their energy in researches in order to find a constitution for controlling the deterioration of catalysts and directed their attention to the fact that, when a temperature difference between the first and the second catalysts after activation thereof increased, burden on the two catalysts was applied only to one of the catalysts, and as a result, the catalyst easily deteriorated. Then, the inventors realized that the deterioration of the catalyst could be controlled by setting secondary air induction position such that the temperature difference after activation of the first and the second catalysts was within a predetermine value, and devised the present invention.

Thus, a first aspect is directed to a four-cycle engine in which an exhaust pipe is connected to an exhaust port of the engine, and catalysts are disposed in and secondary air is introduced into the exhaust pipe, characterized in that a first catalyst is arranged in the exhaust pipe, a second catalyst is arranged a predetermined space apart from the first catalyst in the exhaust pipe downstream of the first catalyst, and secondary air induction pipe for introducing the secondary air is connected to a part of the exhaust pipe between the first and the second catalysts and to a position where a temperature difference of the first and the second catalysts in a measurement operation area from an engine cold start until a predetermined operation time elapses is within a predetermined range.

Here, the "measurement operation area" means an operation area the engine is started in a cold state to start traveling, temperatures of the first and the second catalysts reach an activation temperature (e.g., 300°C), and a predetermined time elapses and then both the catalyst temperatures stabilize. More specifically, for example, the "measurement operation area" means an operation area for about 1000 to 1200 seconds after the engine cold start. In addition, the notion "the temperature difference is within a predetermined range" means, more specifically, for example, about 100°C, although the temperature difference varies depending upon a heat resistant property of catalysts to be adopted, required durability, and the like.

According to a second aspect a muffler surrounding a part of the exhaust pipe is provided, the first catalyst is disposed upstream of the muffler, and the second catalyst is disposed inside the muffler.

According to a third aspect , a muffler surrounding a part of the exhaust pipe is provided, the first catalyst is disposed upstream of the muffler, the second catalyst is disposed inside the muffler, and the secondary air induction pipe is connected to a part of the exhaust pipe located further on the upstream side than the second catalyst and inside the muffler. Advantages of the Invention

According to the engine in accordance with the first aspect , when the engine is started in a cold state, first, a temperature of the first catalyst arranged on the upstream side starts to rise, and slightly after that, a temperature of the second catalyst on the downstream side start to rise. Then, the temperature of the first catalyst reaches a maximum temperature in a short time after the engine start and then gradually falls to stabilize in the measurement operation area. In addition, the temperature of the second catalyst gradually rises since the engine start and stabilizes in the measurement operation area. In this case, the secondary air induction position is set in a position where a difference between maximum temperatures of the first and the second catalysts in the measurement operation area is within a predetermined temperature range. Thus, the temperature difference of the first and the second catalysts can be retained in a predetermined range, deviation of burden due to an excessive temperature difference can be controlled, and as a result, deterioration of the catalysts can be controlled to extend a usable life thereof.

More specifically, for example, as the secondary air induction position is brought closer to the downstream second catalyst side, the temperature of the second catalyst rises by a larger degree, at the same time, the maximum temperature to which the first catalyst reaches in the short time after the engine start falls, and as a result, the temperature difference of the first and the second catalysts increases. On the other hand, as the secondary air induction position is brought closer to the upstream first catalyst side, the maximum temperature of the first catalyst rises, at the same time, the temperature rise of the second catalyst is controlled, and as a result, the temperature difference of the first and the second catalysts decreases.

According to the second aspect, the second catalyst is disposed in the part inside the muffler for the exhaust pipe. Thus, it becomes possible to increase a capacity of the second catalyst without spoiling an appearance of the entire exhaust pipe, and the purification performance can be improved.

In addition, the second catalyst is disposed in the muffler. Thus, the part of the exhaust pipe where the second catalyst is disposed is never cooled by the external air, and time until the second catalyst reaches the activation temperature can be reduced so much more for that.

According to the third aspect, the secondary air induction pipe is connected to the part in the muffler. Thus, the secondary air induction pipe can be supported by the exhaust pipe and the muffler, and connection strength of the secondary air induction pipe can be improved without spoiling the appearance.

### Best Mode for carrying out the Invention

An embodiment of the present invention will be hereinafter described on the basis of the attached drawings.

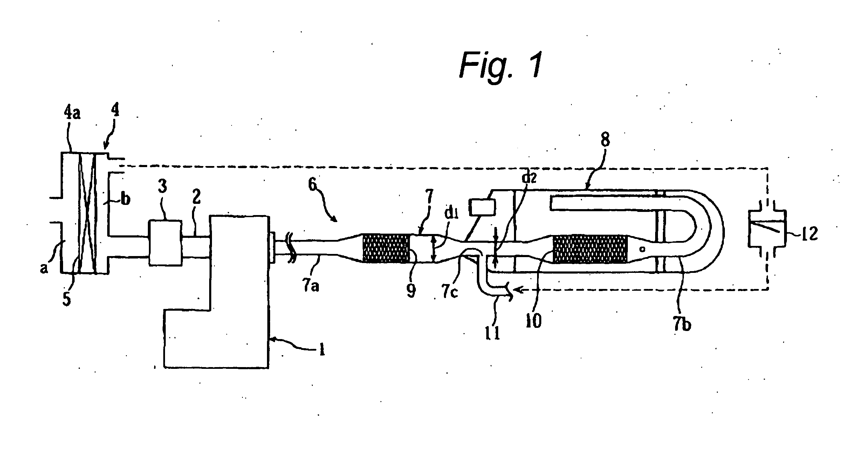

Fig. 1 is a schematic diagram for explaining a four-cycle engine according to an embodiment of the aspects 1, 2 and 3.

In the figure, reference numeral 1 denotes a four-cycle engine which is adopted in an autobicycle such as a motorcycle or a scooter. An intake passage 2 is connected to an intake port (not shown) of the engine 1, a carburetor 3 serving as a fuel supply system is interposed in the middle of the intake passage 2, and an air cleaner 4 is connected to an upstream end of the intake passage 2. This air cleaner 4 has a structure in which the inside of a cleaner case 4a is demarcated into an air suction side "a" and an emission side "b" by an element 5.

The carburetor 3 includes a slow system, which operates in idling and low-speed traveling areas, and a main system, which operates in medium-speed and high-speed traveling areas. In all the operation areas, an air fuel ratio is set to be richer than a theoretical air fuel ratio.

An exhaust gas passage 6 is connected to an exhaust port (not shown) of the engine 1. This exhaust gas passage 6 includes an exhaust pipe 7, which is connected to the exhaust port, and a muffler 8, which is disposed on downstream side of the exhaust pipe 7. The exhaust pipe 7 has an upstream side half portion 7a and a downstream side half portion 7b, which is bent and formed in generally a U shape. The downstream side half portion 7b is housed in the muffler 8.

An exhaust gas purifier is added to the exhaust gas passage 6. This exhaust gas purifier has a structure in which a first catalyst 9, which mainly has a reduction action, is disposed in the upstream side half portion 7a of the exhaust pipe 7, a second catalyst 10, which mainly has an oxidation action, is disposed in the downstream side half portion 7b located downstream of the first catalyst 9, and secondary air induction portion 7c is formed between the first and the second catalysts 9 and 10.

An inner diameter d1 of the portions, where the first and the second catalysts 9 and 10 are arranged, of the exhaust pipe 7 is formed larger than an inner diameter d2 of remaining portions thereof, and the first and the second catalysts 9 and 10 are housed in the large diameter portions.

In addition, the secondary air induction port 7c is located in a small diameter portion between the first and the second catalysts 9 and 10 of the exhaust pipe 7. Since the secondary air induction port 7c is formed in the small diameter portion between the large diameter portions, in which the first and the second catalysts 9 and 10 are housed, in this way, exhaust gas flow velocity in this portion increases, and a negative pressure is generated in the portion of the induction port 7c by a so-called Venturi effect, whereby a suction amount of the secondary air can be increased. For example, as shown in Fig. 10, in the case in which the secondary air induction portion 7c is formed in the portion of the small diameter d1, where the first catalyst 9 is disposed, of the exhaust pipe 7, the Venturi effect cannot be obtained sufficiently, and an intake amount of the secondary air cannot be increased.

A secondary air supply system is connected to the secondary air induction portion 7c. This secondary air supply system has a structure in which an emission side "b" of the air cleaner 4 and the secondary air intake port 7c are communicatively connected by secondary air induction pipe 11, and a lead valve 12, which functions as a check valve, is interposed in the middle of the secondary air supply pipe 11.

This lead valve 12 allows only a flow of the secondary air from the air cleaner 4 side to the exhaust gas passage 6 side and prevents a flow in the opposite direction. More specifically, a negative pressure is generated in the exhaust gas passage 6 by exhaust pulsation caused by opening and closing of intake and exhaust valves (not shown) of the engine 1, and the air in the emission side "b" of the air cleaner 4 is sucked by this negative pressure. Note that the secondary air may be pressurized and supplied by an air pump instead of the lead valve 12.

The secondary air induction pipe 11 is connected to an upstream end of the portion of the downstream side half portion 7b located inside the muffler 8 and is supported by and fixed to the muffler 8 together with the downstream side half portion 7b.

An arrangement position of the first catalyst 9 is set in a position where a temperature of exhaust gas, which enters the first catalyst 9, that is, an entering gas temperature rises to 300°C or more at a time when purification of the exhaust gas is desired to be started. This entering gas temperature is a standard of a temperature essential for activation of the first catalyst 9 to be performed surely. More specifically, the first catalyst 9 is arranged in a position 300 to 500 mm from an exhaust port in the case of an engine with a displacement of about 50 cc.

A temperature of exhaust gas entering the second catalyst 10 is affected by the first catalyst 9 located on the upstream side and the secondary air to be introduced. An arrangement position of the second catalyst 10 is set in a position where an entering gas temperature of the exhaust gas entering the second catalyst 10 rises to 300°C or more at a time when purification of the exhaust gas is desired to be started under such a situation. More specifically, the second catalyst 10 is arranged in a position about 200 mm from the first catalyst 9 in the case of the engine with a displacement of about 50 cc.

Further, the secondary air induction portion 7c is set in a position where a difference between highest temperatures in the measurement operation areas of the first and the second catalysts 9 and 10 is within a predetermined range, more specifically, 100°C. Note that a connection position where the temperature difference is reduced to 100°C or less is found by an experiment. In this embodiment, the secondary air induction pipe 11 is connected in a range up to generally about 1/2 of an interval from the first catalyst 9 to the second catalyst 10 and, more desirably, a portion closest to the first catalyst 9.

According to the exhaust gas purifier according to this embodiment, since the secondary air induction pipe 11 is connected to the position where a difference between maximum temperatures in the measurement operation areas of the first and the second catalysts 9 and 10 is reduced to 100°C or less, the deviation of burden due to the temperature difference of the first and the second catalysts 9 and 10 can be controlled, and as a result, the deterioration of the second catalyst 10 can be controlled, and a usable life thereof can be extended.

In other words, when the secondary air induction pipe 11 is brought close to the side of the first catalyst 9 or the second catalyst 10, a temperature of the catalyst on the side, to which the secondary air induction pipe 11 is brought close, tends to be higher than the other catalyst. Consequently, the secondary air induction pipe 11 is connected to a position where the temperature difference of the first and the second catalysts 9 and 10 is as small as possible, more specifically, a range up to generally about 1/2 of the interval from the first catalyst 9 to the second catalyst 10, whereby a situation in which a high-temperature state last for a long time can be prevented.

In this embodiment, since the second catalyst 10 is disposed in the muffler 8 in which the downstream side half portion 7b of the exhaust pipe 7 is housed, it becomes possible to increase a capacity of the second catalyst 10 without spoiling the appearance, and a purification ability can be improved.

In addition, since the second catalyst 10 is disposed in the muffler 8, the second catalyst 10 is never cooled by the external air, and time until the second catalyst 10 reaches the activation temperature at the cold start time of the engine 1 can be reduced.

In this embodiment, since the secondary air induction pipe 11 is connected to the downstream side half portion 7b located inside the muffler 8, the secondary air induction pipe 11 can be supported and fixed by the exhaust pipe 7 and the muffler8, andconnection strengthof the secondary air induction pipe 11 can be improved without spoiling the appearance.

Next, an experiment performed for confirming the effect of this embodiment will be described.

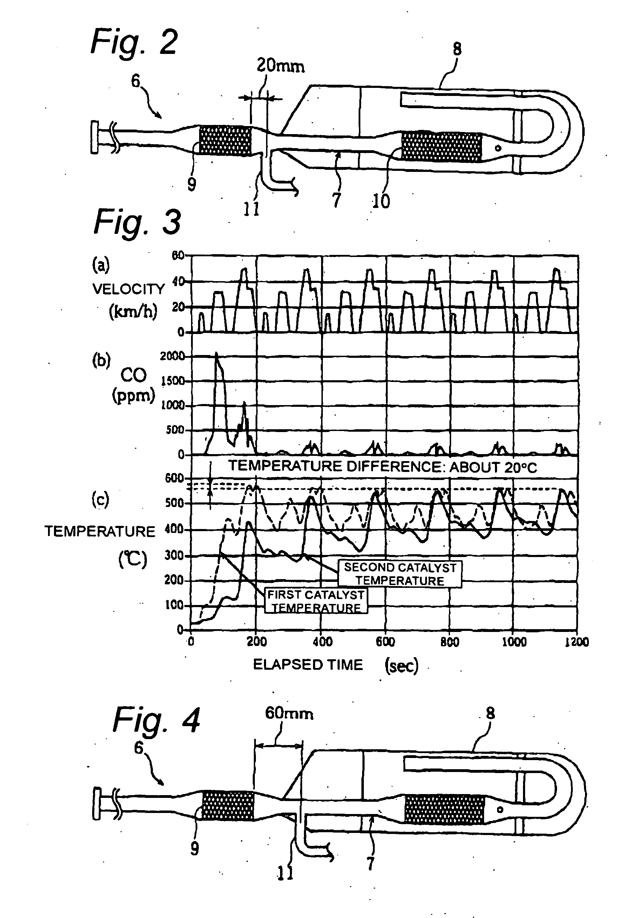

This experiment was performed for finding a connection position of the secondary air induction port 11 where the maximum temperature difference in the measurement operation area of the first and the second catalysts 9 and 10 was reduced to 100°C or less. In this experiment, an exhaust gas purifier with the same structure as the above-mentioned embodiment was adopted, and a so-called ECE40 test method for adjusting traveling time and traveling velocity in accordance with a traveling pattern set in advance was adopted. More specifically, an autobicycle repeated a traveling pattern of 200 seconds, which changed the traveling velocity to about 15 km/h, 30 km/h, and 50 km/h, six times to travel 1200 seconds in total, and changes in an amount of emission of CO and temperatures of the first and the second catalysts were measured (see (a) to (c) of Figs. 3, 5 and 7). In addition, an amount of secondary air introduced during 1200 seconds was set to about 370 to 400 liters.

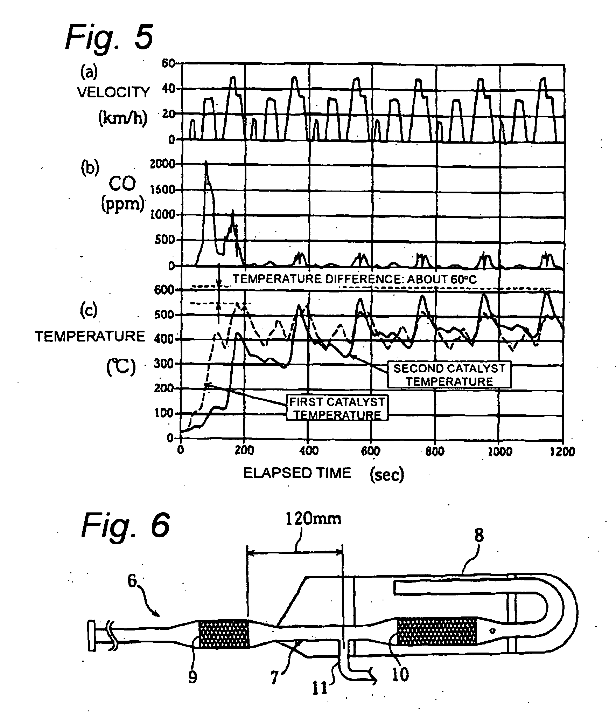

An experiment example 1 was performed with the secondary air induction pipe 11 connected to a position on the downstream side 20 mm from a rear end surface of the first catalyst 9 (see Fig. 2). In addition, an experiment example 2 was performed with the secondary air induction pipe 11 connected to a position on the downstream side 60 mm from the rear end surface of the fist catalyst 9 (see Fig. 4), and a third experiment example 3 was performed with the secondary air induction pipe 11 connected to a position on the downstream side 120 mm from the rear end surface of the first catalyst 9 (see Fig. 6). Further, a change in a temperature of each of the first and the second catalysts 9 and 10 was measured, and an amount of CO was measured. Note that in the experiment examples 1 to 3, capacities of the first and the second catalysts 9 and 10 and engine specifications are assumed to be the same.

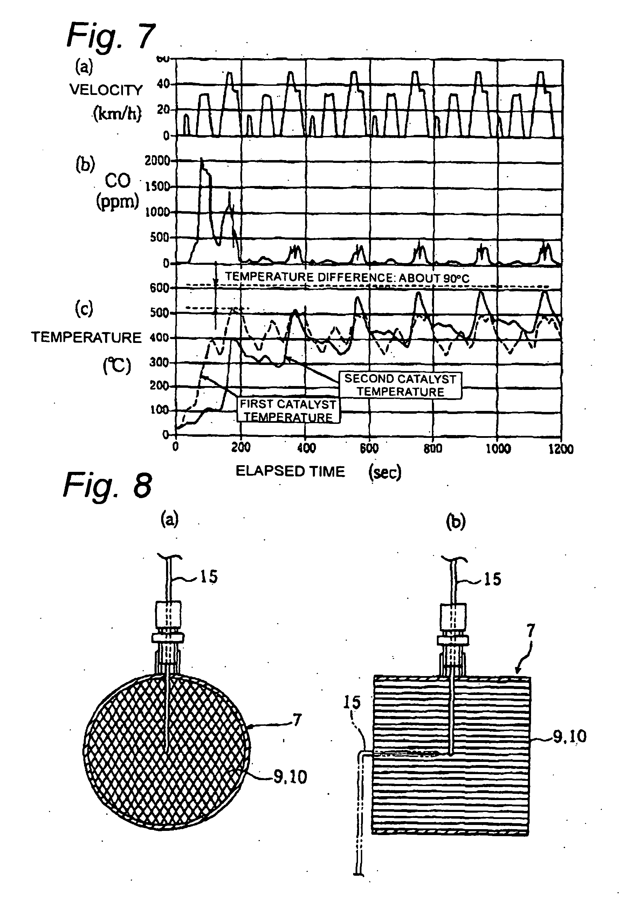

Figs. 8 (a) and (b) show a temperature measurement method for the respective catalysts 9 and 10. A hole of about 3 mmϕ was opened in the exhaust pipe and the catalysts 9 and 10 in a radial direction from the outside, and a sheath K type thermo-couple 15 was inserted and fixed in this hole such that a tip of the thermo-couple 15 was located in centers of the catalysts 9 and 10. In addition, as another measurement method, as indicated by alternate long and two short dash lines in Fig. 8(b), the thermo-couple 15 may be inserted in an axial direction of the catalysts 9 and 10.

In all the experiment examples 1 to 3, the difference between the maximum temperatures of the first and the second catalysts was within 100°C, for example, 20°C, 60°C and 90°C, respectively, and satisfactory values were obtained as the amount of emission of CO as well. In other words, it is seen that arrangement positions of the first and the second catalysts 9 and 10 are set on the basis of a time when the catalysts are desired to be activated and an entering gas temperature, and a connection position of the secondary air induction pipe 11 is subsequently set such that the maximum temperature difference of the first and the second catalysts 9 and 10 is within 100°C, whereby deterioration of the catalysts can be controlled.

When the experiment example 1 and the experiment example 3 are compared, it is seen that removal of CO was facilitated in the case in which the secondary air induction pipe 11 is connected to the portion on the downstream side closest to the first catalyst 9. It seems that this is because the secondary air was blown back from the downstream side of the first catalyst 9, a large amount of CO exhausted at the engine cold time and the blown back air were subjected to oxidation reaction, and as a result, the removal of CO was facilitated.

It is evident that a part of the first catalyst 9 facilitates the removal of CO if the first experiment example and the third experiment example are compared in a state in which the first and the second catalysts 9 and 10 are sufficiently activated, for example, at a time when 1000 seconds or more has elapsed. In other words, an emission level of CO in the experiment example 1 is about 200 ppm (see Fig. 3(b)), which is smaller than that of about 400 ppm in the experiment example 3 (see Fig. 7(b)). It is considered that it is only when capacities of catalysts are changed that a difference occurs in a removal level of CO in a state in which activation states of the first and the second catalysts are substantially the same and the same secondary air is supplied. However, since the first catalysts in the experiment examples 1 and 3 are identical, it is evident that a part of the first catalyst contributes to the removal of CO.

Fig. 9 is a diagram in which mode exhaust gas values according to the experiment examples 1 to 3 are arranged. In the figure, compared with a case in which no catalyst is used, in results obtained in all the experiment examples 1 to 3, a removal rate of CO and HC is high at 75 to 80%, and a removal rate NOx is also high at 70 to 75%.

In addition, in the embodiment, the case in which a fuel is measured to be on the rich side by a carburetor and supplied to an engine is described as an example. However, the present invention is also applicable to a four-cycle engine which detects oxygen concentration in exhaust gas and feedback-controls an amount of fuel injection to an engine such that an air fuel ratio, which is found on the basis of the oxygen concentration, is set as a target air fuel ratio. In short, by connecting secondary air induction pipe to a position where a difference between maximum temperatures of first and second catalysts is, for example, within 100°C, substantially the same effect as the embodiment can be obtained.

### Brief Description of the Drawings

[Fig. 1] Fig. 1 is a schematic diagram of a four-cycle engine equipped with an exhaust gas purifier according to an embodiment of the invention of claims 1, 3 and 4.
[Fig. 2] Fig. 2 is an explanatory diagram of an experiment example 1 whichwas performed for confirming an effect of the embodiment.
[Fig. 3] Fig. 3 is a diagram showing characteristics of the experiment example 1.
[Fig. 4] Fig. 4 is an explanatory diagram of an experiment example 2 which was performed for confirming the effect of the embodiment.
[Fig. 5] Fig. 5 is a diagram showing characteristics of the experiment example 2.
[Fig. 6] Fig. 6 is an explanatory diagram of an experiment example 3 which was performed for confirming the effect of the embodiment.
[Fig. 7] Fig. 7 is a diagram showing characteristics of the experiment example 3.
[Fig. 8] Fig. 8 is a diagram showing a temperature measurement method for catalysts adopted in the experiment examples.
[Fig. 9] Fig. 9 is a characteristic chart showing results of the experiments.
[Fig. 10] Fig. 10 is a diagram showing a comparison example of an exhaust gas passage of the embodiment.
[Fig. 11] Fig. 11 is a schematic diagram of a four-cycle engine equipped with a conventional general exhaust gas purifier according to O₂ feedback control.
[Fig. 12] Fig. 12 is a characteristic chart of the exhaust gas purifier.
[Fig. 13] Fig. 13 is a schematic diagram of a conventional general exhaust gas purifier according to first and second catalysts and secondary air.
[Fig. 14] Fig. 14 is a characteristic chart of the exhaust gas purifier.
[Fig. 15] Fig. 15 is a characteristic chart showing a relation between an air fuel ratio and exhaust gas of a general four-cycle engine.

### Description of Reference Numerals

- 1: Four-cycle engine
- 6: Exhaust pipe
- 7: Exhaust pipe
- 8: Muffler
- 9: First catalyst
- 10: Second catalyst
- 11: Secondary air induction pipe

## Claims

1. Four-cycle engine, in which an exhaust pipe (7) is connected to an exhaust port of the engine, having an exhaust gas purifier with at least first and second catalysts (9, 10) arranged in the exhaust pipe (7), wherein said second catalyst (10) is arranged a predetermined space apart from the first catalyst (9) in the exhaust pipe (7) downstream of the first catalyst(9), wherein secondary air is introduced to the exhaust pipe (7) between said first and second catalysts (9, 10) by a secondary air introduction pipe (11), **characterized in that** the position (7c) of the connection of said secondary air introduction pipe (11) in said exhaust pipe (7) is determined such that a temperature difference between catalysts(9, 10) in a measurement area from an engine cold start operation is within a predetermined range until a predetermined operation time elapses.

2. Four-cycle engine according to claim 1, **characterized by** a muffler (8) surrounding a part of the exhaust pipe (7), wherein the first catalyst (9) is disposed upstream of the muffler (8), and wherein the second catalyst (10) is disposed inside the muffler (8).

3. Four-cycle engine according to claim 2, **characterized in that** the secondary air induction pipe (11) is connected to a part of the exhaust pipe (7) located upstream of the second catalyst and inside of the muffler (8).

4. Four-cycle engine according to one of claims 1 to 3, **characterized in that** the secondary air intake port (7c) is located in a small diameter portion (d2) of the exhaust pipe (7) arranged between the first and second catalysts (9, 10) of the exhaust pipe (7).

5. Method for purifying an exhaust gas of a four-cycle engine, in which an exhaust pipe (7) is connected to an exhaust port of the engine, having an exhaust gas purifier with at least first and second catalysts (9, 10) arranged) in the exhaust pipe (7), wherein said second catalyst (10) is arranged a predetermined space apart from the first catalyst (9) in the exhaust pipe (7) downstream of the first catalyst (9), said method comprises:
introducing secondary air to the exhaust pipe (7) between said first and second catalysts (9, 10) by a secondary air introduction pipe (11), wherein the position (7c) of the connection of said secondary air introduction pipe (11) in said exhaust pipe (7) is determined such that a temperature difference between catalysts (9, 10) in a measurement area from an engine cold start operation is within a predetermined range until a predetermined operation time elapses.

## Patentansprüche

1. Viertakt- Motor, in dem ein Abgasrohr (7) mit einer Abgasöffnung der Brennkraftmaschine verbunden ist, mit einem Abgasreiniger mit zumindest einem ersten und zweiten Katalysator (9, 10), angeordnet in dem Abgasrohr (7), wobei der zweite Katalysator (10) in einem vorbestimmten Abstand entfernt von dem ersten Katalysator (9) in dem Abgasrohr (7) stromab des ersten Katalysators (9) angeordnet ist, wobei Sekundärluft in das Abgasrohr (7) zwischen dem ersten und zweiten Katalysator (9, 10) durch ein Sekundärluft- Einleitungsrohr (11) eingeleitet wird, **dadurch gekennzeichnet, dass** die Position (7c) der Verbindung des Sekundärluft- Einleitungsrohres (11) in dem Abgasrohr (7) derart festgelegt wird, dass eine Temperaturdifferenz zwischen den Katalysatoren (9, 10) in einem Messbereich von einer Brennkraftmaschinen- Kaltstartoperation innerhalb eines vorbestimmten Bereiches ist, bis eine vorbestimmte Operationszeit vergeht.

2. Viertakt- Motor nach Anspruch 1, **gekennzeichnet durch** einen Schalldämpfer (8), der einen Teil des Abgasrohres (7) umgibt, wobei der erste Katalysator (9) stromauf des Schalldämpfers (8) angeordnet ist und wobei der zweite Katalysator (10) innerhalb des Schalldämpfers (8) angeordnet ist.

3. Viertakt- Motor nach Anspruch 2, **dadurch gekennzeichnet, dass** das Sekundärluft- Einleitungsrohr (11) mit einem Teil des Abgasrohres (7), angeordnet stromauf des zweiten Katalysators (10) und innerhalb des Schalldämpfers (8), verbunden ist.

4. Viertakt- Motor nach einem der Ansprüche 1 bis 3, **dadurch gekennzeichnet, dass** die Sekundärluft- Einleitungsöffnung (7c) in einem Abschnitt (d2) mit kleinem Durchmesser des Abgasrohres (7), angeordnet zwischen dem ersten und zweiten Katalysator (9, 10), platziert ist.

5. Verfahren zum Reinigen eines Abgases eines Viertakt- Motors, in dem ein Abgasrohr (7) mit einer Abgasöffnung der Brennkraftmaschine verbunden ist, mit einem Abgasreiniger mit zumindest einem ersten und zweiten Katalysator (9, 10), angeordnet in dem Abgasrohr (7), wobei der zweite Katalysator (10) in einem vorbestimmten Abstand entfernt von dem ersten Katalysator (9) in dem Abgasrohr (7) stromab des ersten Katalysators (9) angeordnet ist, wobei das Verfahren aufweist:
Einleiten von Sekundärluft in das Abgasrohr (7) zwischen den ersten und zweiten Katalysator (9, 10) durch ein Sekundärluft- Einleitungsrohr (11), wobei die Position (7c) der Verbindung des zweiten Sekundärluft- Einleitungsrohres (11) in dem Abgasrohr (7) derart festgelegt ist, dass eine Temperaturdifferenz zwischen den Katalysatoren (9, 10) in einem Messbereich von einer Brennkraftmaschinen- Kaltstartoperation innerhalb eines vorbestimmten Bereiches ist, bis eine vorbestimmte Operationszeit vergeht.

## Revendications

1. Moteur à quatre temps dans lequel un tuyau d'échappement (7) est relié à un orifice d'échappement du moteur, comportant un épurateur de gaz d'échappement avec au moins des premier et second catalyseurs (9, 10) disposés dans le tuyau d'échappement (7), étant précisé que le second catalyseur (10) est disposé à une distance prédéterminée du premier catalyseur (9) dans le tuyau d'échappement (7), en aval dudit premier catalyseur (9), et que de l'air secondaire est introduit dans le tuyau d'échappement (7) entre les premier et second catalyseurs (9, 10) par un tuyau d'introduction d'air secondaire (11), **caractérisé en ce que** la position (7c) du raccordement du tuyau d'introduction d'air secondaire (11) dans le tuyau d'échappement (7) est déterminée de telle sorte qu'une différence de température entre les catalyseurs (9, 10) dans une zone de mesure à partir d'un démarrage à froid du moteur soit située à l'intérieur d'une plage prédéterminée jusqu'à ce qu'un temps de fonctionnement prédéterminé soit écoulé.

2. Moteur à quatre temps selon la revendication 1, **caractérisé par** un silencieux (8) qui entoure une partie du tuyau d'échappement (7), étant précisé que le premier catalyseur (9) est disposé en amont du silencieux (8) et que le second catalyseur (10) est disposé à l'intérieur du silencieux (8).

3. Moteur à quatre temps selon la revendication 2, **caractérisé en ce que** le tuyau d'introduction d'air secondaire (11) est raccordé à une partie du tuyau d'échappement (7) située en amont du second catalyseur et à l'intérieur du silencieux (8).

4. Moteur à quatre temps selon l'une des revendications 1 à 3, **caractérisé en ce que** l'orifice d'admission d'air secondaire (7c) est situé dans une partie à petit diamètre (d2) du tuyau d'échappement (7) qui est disposée entre les premier et second catalyseurs (9, 10) du tuyau d'échappement (7).

5. Procédé pour purifier des gaz d'échappement d'un moteur à quatre temps, selon lequel un tuyau d'échappement (7) est relié à un orifice d'échappement du moteur comportant un épurateur de gaz d'échappement avec au moins des premier et second catalyseurs (9, 10) disposés dans le tuyau d'échappement (7), étant précisé que le second catalyseur (10) est disposé à une distance prédéterminée du premier catalyseur (9) dans le tuyau d'échappement (7), en aval dudit premier catalyseur (9), ledit procédé comprenant l'étape qui consiste à :
introduire de l'air secondaire dans le tuyau d'échappement (7) entre les premier et second catalyseurs (9, 10) par un tuyau d'introduction d'air secondaire (11), étant précisé que la position (7c) du raccordement du tuyau d'introduction d'air secondaire (11) dans le tuyau d'échappement (7) est déterminée de telle sorte qu'une différence de température entre les catalyseurs (9, 10) dans une zone de mesure à partir d'un démarrage à froid du moteur soit située à l'intérieur d'une plage prédéterminée jusqu'à ce qu'un temps de fonctionnement prédéterminé soit écoulé.
